Europäisches Patentamt

(19) European Patent Office

Office européen des brevets

(11) Veröffentlichungsnummer: **0 157 935**
**B1**

# (12) EUROPÄISCHE PATENTSCHRIFT

(45) Veröffentlichungstag der Patentschrift:
**18.05.88**

(51) Int. Cl.⁴: **F 16 C 33/61,** F 16 C 43/06

(21) Anmeldenummer: **84115498.2**

(22) Anmeldetag: **15.12.84**

(54) Drahtwälzlager.

(30) Priorität: **29.03.84 DE 3411562**

(43) Veröffentlichungstag der Anmeldung:
**16.10.85 Patentblatt 85/42**

(45) Bekanntmachung des Hinweises auf die Patenterteilung:
**18.05.88 Patentblatt 88/20**

(84) Benannte Vertragsstaaten:
**CH DE FR GB LI NL SE**

(56) Entgegenhaltungen:
**DE-A-1 525 213**
**DE-A-2 632 363**
**DE-A-3 106 658**
**GB-A-2 126 667**

(73) Patentinhaber: **INA Wälzlager Schaeffler KG,
Industriestrasse 1-3, D-8522 Herzogenaurach (DE)**

(72) Erfinder: **Basener, Helmut, Freiwaldauerstrasse 23,
D-8552 Höchstadt (DE)**

## Beschreibung

Die Erfindung betrifft ein Drahtwälzlager, bestehend aus zwei ungeteilt hergestellten, konzentrisch zueinander angeordneten Tragringen, die in einander zugekehrten Nuten je zwei Laufdrähte mit beiderseits durch Schultern begrenzten Laufflächen für auf ihnen abrollenden Kugeln aufweisen, wobei jeder Tragring neben einem die Hauptaxialbelastung aufnehmenden Tragdraht einen nur das abhebende Kippmoment aufnehmenden Haltedraht aufweist und der eine Tragring an einer Stelle seines Umfangs mit einer durch einen Stopfen verschlossenen Füllöffnung versehen ist, wobei diese Füllöffnung derart angeordnet ist, daß sie nur einen Laufdraht unterbricht und der Stopfen eine den an der Füllöffnung fehlenden Laufdraht ersetzende Laufbahn aufweist.

Diese der Erfindung zugrundeliegende Lagerbauart hat gegenüber Ausführungen, bei denen zum Zwecke des Lagerzusammenbaus einer der Tragringe geteilt ausgeführt ist, den Vorteil, daß sie wegen der ungeteilt ausgeführten Tragringe bei höherer Festigkeit, Steifigkeit und Genauigkeit erheblich kostengünstiger herstellbar ist. Ein weiterer Vorteil liegt in der im Vergleich zu Lagern mit geteilten Tragringen geringeren Masse, die durch die geringeren erforderlichen Querschnitte der Tragringe bedingt ist.

Aus dem der DE-A-2 632 363 zugrundeliegenden Stand der Technik ist es bekannt, nur einen der Laufdrähte im Bereich einer Einfüllöffnung zu unterbrechen und an die, die Füllöffnung verschließende Platte einstückig ein Teil anzuformen, das nach dem Einsetzen der Verschlußplatte an dieser Stelle den fehlenden Laufdraht ersetzt. Dabei ist es offengelassen, welcher Laufdraht durch die Füllöffnung unterbrochen ist. Ist dies ein Tragdraht, so leidet darunter die Belastbarkeit des Lagers erheblich und es ist zudem mit Beschädigungen an den Wälzkörpern zu rechnen, wenn diese unter Belastung den Stoß zwischen Laufdraht einerseits und dem an die Verschlußplatte angeformten Teil andererseits überrollen.

Der Erfindung liegt die Aufgabe zugrunde, ein Lager der eingangs genannten Art so zu verbessern, daß trotz des Vorhandenseins einer Füllöffnung Tragfähigkeitsverluste vermieden werden und gleichzeitig sowohl während des Befüllens des Lagers mit Kugeln, als auch während des späteren Betriebes des Lagers Beschädigungen der Wälzkörper vermieden werden.

Diese Aufgabe wird erfindungsgemäß dadurch gelöst, daß einerseits der von der Füllöffnung unterbrochene Laufdraht ein Haltedraht ist und andererseits zwischen dem Haltedraht des anderen Tragringes und der Wandung der zugehörigen Nut ein elastischer Zwischenring vorgesehen ist.

Durch diese Maßnahme ist sichergestellt, daß der hochbelastete Tragdraht seine Wanderbewegung ungehindert ausführen kann. Da der nur gering belastete Haltedraht kaum zu Verklemmungen neigt, ist die Gefahr von Funktionsstörungen praktisch gänzlich beseitigt. Weiterhin ist gewährleistet, daß die Kugeln ohne Beschädigungen in das Lager eingebracht werden können.

Die Herstellung des erfindungsgemäßen Wälzlagers ist dann besonders einfach und kostengünstig möglich, wenn nach einer Variante der Erfindung die Füllöffnung und der Stopfen zylindrisch ausgebildet sind.

In den Zeichnungen sind Ausführungsbeispiele der Erfindung dargestellt. Es zeigen:

Fig. 1 in stark verkleinertem Maßstab eine perspektivische Ansicht eines erfindungsgemäßen Drahtwälzlagers,

Fig. 2 einen Längsschnitt nach Linie II-II in Figur 1.

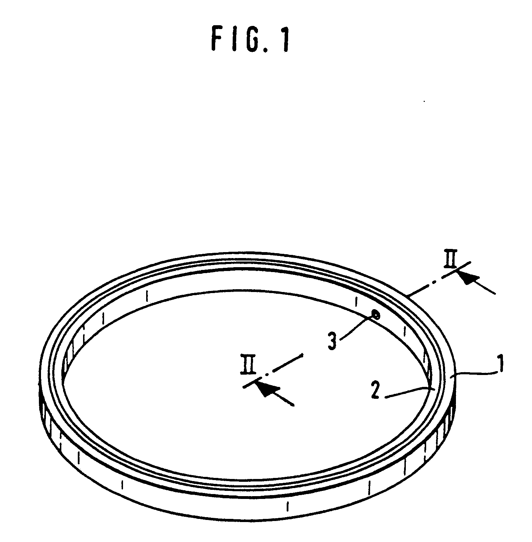

Fig. 1 zeigt ein Drahtwälzlager, mit einem äußeren Tragring 1 und einem inneren Tragring 2, wobei letzterer eine durch einen Stopfen 3 verschlossene Füllöffnung aufweist.

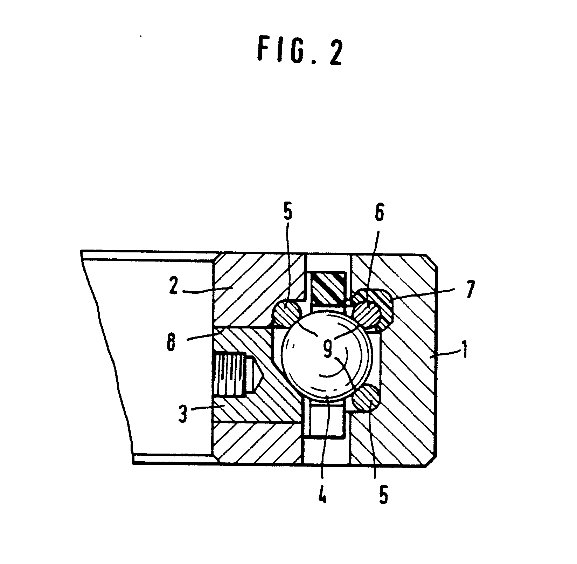

Wie Fig. 2 zeigt, ist das Drahtwälzlager als Vierpunktkugellager ausgebildet. Der äußere Tragring 1 enthält ebenso wie der innere Tragring 2 je einen Tragdraht 5. Zwischen dem Haltedraht 6 des äußeren Tragringes 1 und der diesen Haltedraht aufnehmenden Nut ist ein elastischer Zwischenring 7 vorgesehen, der es gestattet, die Kugeln 4 ohne Beschädigung in das Drahtwälzlager zu montieren.

Zum Einbringen der Kugeln 4 in das Drahtwälzlager werden die mit den Laufdrähten 5 und 6 versehenen Tragringe 1 und 2 exzentrisch zueinander angeordnet und zunächst soviele Kugeln 4 als möglich in das Drahtwälzlager eingebracht. Dann werden die Kugeln 4 über den Umfang des Drahtwälzlagers verteilt, wodurch sich die Tragringe 1 und 2 konzentrisch zueinander ausrichten. Das Drahtwälzlager wird nun mit einer den elastischen Zwischenring 7 zusammendrückenden Axialkraft beaufschlagt, die groß genug ist, um den Zwischenring 7 so zu verformen, daß sich die Tragringe 1 und 2 um ein Maß axial gegeneinander verschieben, das ausreicht um die restlichen Kugeln 4 durch die Füllöffnung 8 kraftfrei über die Schultern der Kugellaufbahnen 9 der Tragdrähte 5 in das Drahtwälzlager einbringen zu können. Wenn alle Kugeln 4 eingebracht sind, kann die Axialkraft von dem Drahtwälzlager genommen werden, das dann eine selbsthaltende Baueinheit bildet.

Durch geeignete Bemessung des Zwischenringes 7 kann das Drahtwälzlager spielfrei eingestellt bzw. vorgespannt werden. Außerdem verbessert der Zwischenring 7 die Dämpfungseigenschaften des Drahtwälzlagers.

## Patentansprüche

1. Drahtwälzlager, bestehend aus zwei un teilt hergestellten, konzentrisch zueinander angeordneten Tragringen (1, 2), die in einander zugekehrten Nuten je zwei Laudrähte (5, 6) beiderseits durch Schultern begrenzten Laufflächen (9) für auf ihnen abrollenden Kugeln (4) aufweisen, wobei jeder Tragring (1, 2) neben einem die Hauptaxialbelastung aufnehmenden Tragdraht (5) einen nur das abhebende Kippmoment aufnehmenden Haltedraht (6) aufweist und der eine Tragring (2) an einer Stelle seines Umfanges mit einer durch einen Stopfen (3) verschlossenen Füllöffnung (8) versehen ist, wobei die Füllöffnung (8) derart angeordnet ist, daß sie nur einen Laufdraht unterbricht und der Stopfen (3) eine den an der Füllöffnung fehlenden Laufdraht ersetzende Laufbahn aufweist, <u>dadurch gekennzeichnet</u>, daß der von der Füllöffnung unterbrochene Laufdraht ein Haltedraht ist, und daß zwischen dem Haltedraht (6) des anderen Tragringes (1) und der Wandung der zugehörigen Nut ein elastischer Zwischenring (7) vorgesehen ist.

2. Drahtwälzlager nach Anspruch 1, dadurch gekennzeichnet, daß die Füllöffnung (8) und der Stopfen (3) zylindrisch ausgebildet sind.

## Claims

1. Wire rolling bearing, consisting of two solidly manufactured supporting rings (1, 2) arranged concentrically to one another, which have two raceway wires (5, 6) each in grooves facing one another with raceway surfaces (9) for balls (4) for rolling thereon delimited on both sides by shoulders, wherein each supporting ring (1, 2) comprises as well as a supporting wire (5) receiving the main axial load a securing wire (6) receiving only the lifting tilting movement and the one supporting ring (2) is provided at one location of its periphery with a filling opening (8) closed by a plug (3), wherein the filling opening (8) is so arranged that it only interrupts one raceway wire and the plug (3) comprises a raceway replacing the raceway wire lacking at the filling opening, characterized in that the raceway wire interrupted by the filling opening is a securing wire, and in that an elastic intermediate ring (7) is provided between the securing wire (6) of the other supporting ring (1) and the wall of the corresponding groove.

2. Wire rolling bearing according to claim 1, characterized in that the filling opening (8) and the plug (3) are cylindrically formed.

## Revendications

1. Roulement sur fils, comprenant deux bagues de support (1, 2) non divisées, concentriques l'une à l'autre, qui comportent chacune, dans des rainures en regard, deux fils de roulement (5, 6) avec des surfaces de roulement (9) délimitées des deux côtés par des épaulements pour des billes (4) qui roulent sur elles, chaque bague de support (1, 2) comportant, outre un fil de support (5) absorbant la charge axiale principale, un fil de retenue (6) absorbant seulement le moment de renversement et de soulèvement, et l'une des bagues de support (2) comportant, en un point de sa périphérie, un orifice de remplissage (8) fermé par un bouchon (3), l'orifice de remplissage (8) étant agencé de façon à interrompre un seul fil de roulement et le bouchon (3) comportant un chemin de roulement remplaçant le fil de roulement faisant défaut sur l'orifice de remplissage, caractérisé en ce que le fil de roulement interrompu par l'orifice de remplissage est un fil de retenue, et en ce qu'il est prévu entre le fil de retenue (6) de l'autre bague de support (1) et la paroi de la rainure correspondante une bague intermédiaire (7) élastique.

2. Roulement sur fils suivant la revendication 1, caractérisé en ce que l'orifice de remplissage (8) et le bouchon (3) ont une conformation cylindrique.

# FIG.1

# FIG. 2